# EUROPÄISCHE PATENTANMELDUNG

(11) **EP 3 546 103 A1**
(43) Veröffentlichungstag der Anmeldung: **02.10.2019**
(21) Anmeldenummer: 18020234.3
(22) Anmeldetag: 28.05.2018
(51) Int. Cl.: B23K 9/035

(54) **SCHWEISSBADSICHERUNG UND VERFAHREN ZUR HERSTELLUNG EINER SCHWEISSBADSICHERUNG**

(30) Priorität: 31.03.2018 DE 102018002652
(71) Anmelder: Linde Aktiengesellschaft, 80331 München (DE)
(72) Erfinder: Krömmer, Werner, 84034 Landshut (DE); Pfreuntner, Tobias, 85716 Unterschleißheim (DE)

(57) **Zusammenfassung**

Die Erfindung betrifft eine Schweißbadsicherung (10), aufweisend einen Träger (12) und ein Beschichtungselement (14), welches auf dem Träger (12) angeordnet ist und ein wärmeisolierendes Material aufweist, wobei das Beschichtungselement (12) eine Dicke von zumindest 100 µm und höchstens 1 mm aufweist. Die Erfindung betrifft ferner ein Verfahren zur Herstellung einer Schweißbadsicherung (10).

## Beschreibung

Die Erfindung betrifft eine Schweißbadsicherung und ein Verfahren zur Herstellung einer Schweißbadsicherung. Die Erfindung liegt somit insbesondere auf dem technischen Gebiet der Schweißtechnik.

### Stand der Technik

Im Stand der Technik sind Schweißbadsicherungen bekannt, welche in diversen Schweißverfahren zur Anwendung gelangen, wie etwa beim Lichtbogenschweißen. Besonders beim Schweißen von langen Längsnähten, welche verschiedenste Nahtvorbereitungen aufweisen können, kann die Verwendung einer Schweißbadsicherung vorteilhaft sein, um etwa das Schweißbad räumlich in Position zu halten.

Oftmals werden dazu Schweißbadsicherungen aus metallischen Werkstoffen verwendet, welche den hohen Temperaturen des Schweißbades standhalten können. Auch sind Schweißbadsicherungen bekannt, welche einen metallischen Träger aufweisen, welcher mit einem keramischen Werkstoff besetzt ist, der dazu dient, ein Anschmelzen der Schweißbadsicherung an die Schweißnaht bzw. an das Schweißbad zu verhindern. Beispielsweise offenbart die Druckschrift DE 19725437 A1 eine solche Schweißbadsicherung. Der keramische Werkstoff kann dabei beispielsweise aus Metalloxiden bestehen.

Den im Stand der Technik bekannten Schweißbadsicherungen haftet der Nachteil an, dass diese in einem sehr großen Maß Wärme aus dem Schweißbad abführen und somit ein hoher Energieeintrag erforderlich ist, um das Schweißbad bzw. den Schweißvorgang aufrechtzuerhalten.

Der Erfindung liegt daher die Aufgabe zu Grunde, eine Schweißbadsicherung bereitzustellen, welche eine Reduzierung des erforderlichen Energieeintrags zum Schweißen ermöglicht.

Die Aufgabe wird durch eine Schweißbadsicherung und ein Verfahren zur Herstellung einer Schweißbadsicherung mit den Merkmalen des jeweiligen unabhängigen Anspruchs gelöst. Bevorzugte Ausführungsformen sind Gegenstand der abhängigen Ansprüche sowie der nachfolgenden Beschreibung.

### Offenbarung der Erfindung

In einem ersten Aspekt betrifft die Erfindung eine Schweißbadsicherung mit einem Träger, sowie mit einem Beschichtungselement, welches auf dem Träger angeordnet ist und ein wärmeisolierendes Material aufweist. Das Beschichtungselement weist eine Dicke von zumindest 100 µm und höchstens 1 mm auf.

In einem weiteren Aspekt betrifft die Erfindung ein Verfahren zur Herstellung und/oder Erneuerung einer Schweißbadsicherung. Das Verfahren umfasst ein Bereitstellen eines Trägers, sowie ein Aufbringen eines ein wärmeisolierendes Material aufweisenden Beschichtungselements auf den Träger derart, dass das Beschichtungselement eine Dicke von zumindest 100 µm und höchstens 1 mm aufweist.

Der Träger kann beispielsweise als ein schienenförmiges Element ausgebildet sein, welches in seiner Formgebung an den Verlauf der zu schweißenden Schweißnaht angepasst sein kann. Beispielsweise kann der Träger geradlinig ausgebildet sein, um beispielsweise für geradlinig verlaufende Schweißnähte verwendet werden zu können. Vorzugsweise kann der Träger einen flachen Querschnitt und/oder einen U-förmigen und/oder V-förmigen Querschnitt aufweisen. Insbesondere kann der Querschnitt des Trägers über seine gesamte Länge gleichartig ausgebildet sein. Alternativ kann der Träger vorzugsweise in verschiedenen Längenabschnitten unterschiedliche Querschnittformen aufweisen.

Dass das Beschichtungselement ein wärmeisolierendes Material aufweist, bedeutet dabei vorzugsweise, dass zumindest ein Teil des Beschichtungselements von einem wärmeisolierenden Material gebildet wird. Besonders bevorzugt kann das Beschichtungselement ausschließlich aus dem wärmeisolierenden Material bestehen.

Dass das Verfahren zur Herstellung und/oder Erneuerung einer Schweißbadsicherung dient, bedeutet dabei, dass das Verfahren entweder zur Herstellung einer neuen Schweißbadsicherung verwendet werden kann und/oder zur Aufbereitung und/oder Erneuerung einer bereits verwendeten und/oder verschlissenen Schweißbadsicherung verwendet werden kann. In letzterem Fall kann das Verfahren beispielsweise dazu dienen, ein auf dem Träger angeordnetes und verschlissenes Beschichtungselement zu erneuern bzw. aufzufrischen bzw. wiederherzustellen, um sodann die Schweißbadsicherung in gewöhnlicher Weise wieder verwenden zu können.

Die Erfindung bietet den Vorteil, dass durch die Verwendung einer erfindungsgemäßen Schweißbadsicherung beim Schweißen ein Energieverlust bzw. Wärmeverlust aus der Prozesszone, d.h. aus dem Schweißbad, verringert werden kann, da aufgrund des Beschichtungselements die Wärme, welche aus dem Schweißbad über die Schweißbadsicherung abgeleitet wird, deutlich verringert werden kann. Dies bietet wiederum den Vorteil, dass der Energieeintrag in die Prozesszone reduziert werden kann, d.h. dass weniger Wärmeenergie für den Schweißprozess zur Verfügung gestellt werden muss, da die herkömmlicherweise während des Schweißvorgangs über die Schweißbadsicherung abgeleitete Wärmeenergie zumindest teilweise nicht kompensiert werden muss. Dadurch kann der Schweißprozess effizienter, d.h. mit geringerem Energieaufwand, realisiert werden.

Ferner bietet die Erfindung den Vorteil, dass durch die Verwendung einer erfindungsgemäßen Schweißbadsicherung die Schweißgeschwindigkeit erhöht werden kann, da die bereitgestellte Wärmequelle, wie etwa ein Schweißbrenner, aufgrund der reduzierten thermischen Verluste die Prozesszone schneller aufheizen kann und somit der Schweißvorgang schneller voranschreiten kann, als bei der Verwendung einer herkömmlichen Schweißbadsicherung. Somit kann die Effizienz des Schweißvorgangs gesteigert werden.

Ferner bietet die Erfindung den Vorteil, dass die Prozesssicherheit des Schweißprozesses durch die Verwendung einer erfindungsgemäßen Schweißbadsicherung erhöht werden kann, da das Maß an abfließender Wärme aus der Prozesszone deutlich reduziert ist und somit die gegebenenfalls durch die Schweißbadsicherung abgeleitete Wärme nicht anderweitig aufgefangen und/oder abgeführt werden muss. Mit anderen Worten bietet die Erfindung den Vorteil, dass sich die Schweißbadsicherung gar nicht oder in einem deutlich geringeren Maße erhitzt, als dies bei herkömmlichen Schweißbadsicherungen der Fall ist, und somit eine von einer stark erhitzten Schweißbadsicherung ausgehende Gefahr reduziert ist oder entfällt.

Ferner bietet die Erfindung den Vorteil, dass durch das erfindungsgemäße Herstellungsverfahren bzw. Erneuerungsverfahren eine kostengünstige Möglichkeit geschaffen wird, eine erfindungsgemäße Schweißbadsicherung herzustellen und/oder Schweißbadsicherungen aufzuwerten. Beispielsweise kann das Verfahren dazu dienen, herkömmliche Schweißbadsicherungen, welche nicht über ein derartiges Beschichtungselement verfügen, mit einem wärmeisolierenden Beschichtungselement zu versehen und somit die wärmeisolierenden Eigenschaften der Schweißbadsicherung herzustellen und/oder zu verbessern. Ferner bietet die Erfindung somit den Vorteil, dass bereits verwendete und/oder verschlissene Schweißbadsicherungen, bei welchen das Beschichtungselement zumindest teilweise abgetragen und/oder beschädigt wurde, insbesondere während eines bereits durchgeführten Schweißprozesses, wieder erneuert werden können und somit zur weiteren Verwendung bereitstehen. Daher bietet die Erfindung den Vorteil, dass eine kostengünstige Möglichkeit bereitgestellt wird, um verschlissene Schweißbadsicherungen wiederzuverwenden, was finanzielle Vorteile bietet und auch eine ressourcenschonende Bereitstellung und/oder Verwendung der Schweißbadsicherungen ermöglicht.

Zudem bietet die Erfindung den Vorteil, dass bei der gewählten Dicke des Beschichtungselements eine effektive Wärmeisolierung des Schweißbades von der Schweißbadsicherung bzw. vom Träger erreicht werden kann, während die Herstellungskosten und/oder der Materialaufwand gering gehalten werden können. Im Gegensatz dazu können dünnere Dicken als der erfindungsgemäße Dickenbereich des Beschichtungselements den Nachteil aufweisen, dass keine ausreichende Wärmeisolierung mehr erzielt werden kann, während größere Dicken als der erfindungsgemäße Dickenbereich den Nachteil aufweisen kann, dass sich die Herstellungskosten und insbesondere die Materialkosten, welche vor allem im Fall von Zirkoniumoxid durchaus signifikant sein können, deutlich erhöhen, ohne jedoch einen größeren Nutzen hinsichtlich der Wärmeisolierung zu bieten.

Vorzugsweise ist der Träger aus einem festen Formwerkstoff ausgebildet ist, insbesondere aus einem metallischen Werkstoff und/oder aus Keramik. Dies bietet den Vorteil, dass der Träger einerseits in an den Verlauf der zu schweißend Schweißnaht angepasster Form hergestellt werden kann und andererseits eine ausreichende Stabilität aufweist, um während des Schweißvorgangs stabil in Position zu bleiben. Ferner bietet dies den Vorteil, dass der Träger dazu ausgelegt ist, auch bei starker Hitzeeinwirkung, beispielsweise wenn das Beschichtungselement beschädigt und/oder abgetragen ist, die Form zumindest teilweise und/oder zumindest zeitweise beizubehalten. Vorzugsweise ist der Träger aus einem Material gefertigt, welches Stahl und/oder hochregierten Stahl und/oder Kupfer und/oder Kupferlegierungen umfasst oder daraus besteht.

Vorzugsweise weist das Beschichtungselement einen höheren Wärmeübergangswiderstand bzw. eine geringere Wärmeleitfähigkeit auf als der Träger. Besonders bevorzugt weist das Beschichtungselement im Allgemeinen eine niedrige Wärmeleitfähigkeit auf. Der Wärmewiderstand bezeichnet den Widerstand, den eine der Schweißnaht zugewandte Oberfläche des Beschichtungselements dem aus dieser Richtung kommenden Wärmestrom entgegensetzt. Mit anderen Worten beschreibt der Wärmeübergangswiderstand den Widerstand, den das Beschichtungselement der Wärmeaufnahme vom Schweißbad entgegensetzt. Besonders bevorzugt weist die Wärmeleitfähigkeit des Beschichtungselements einen Wert von höchstens dem halben Wert derjenigen des Trägermaterials auf, weiter bevorzugt von höchstens einem Viertel, noch weiter bevorzugt von höchstens einem Fünftel, noch weiter bevorzugt von höchstens einem Zehntel oder noch weiter bevorzugt von höchstens einem Zwanzigstel oder darunter auf. Am Beispiel von Stahl als Trägermaterial mit einer Wärmeleitfähigkeit von etwa 50 W/mK beträgt diejenige des Beschichtungselements 2 - 25 W/mK, vorzugsweise 2 - 5 W/mK.

Vorzugsweise umfasst das wärmeisolierende Material ein Metalloxid, insbesondere Zirkoniumoxid, oder besteht daraus. Zirkoniumoxid ist dabei eine oxidierte Form des Zirkoniums, wie etwa ZrO₂. Dies bietet den Vorteil, dass eine besonders effektive und effiziente Wärmeisolierung erzielt werden kann, da sich viele Metalloxide im Allgemeinen und Zirkoniumoxid im besonderen durch sehr gute Wärmeisolierungseigenschaften auszeichnen. Ferner bietet dies den Vorteil, dass Metalloxid und insbesondere Zirkoniumoxid mittels eines thermischen Spritzverfahrens auf den Träger aufgebracht werden können und sich somit für eine einfache und/oder kostengünstige Herstellung der Schweißbadsicherung eignen. Besonders bevorzugt ist demnach das Befestigungselement mittels thermischen Spritzens auf dem Träger angeordnet und/oder befestigt.

Vorzugsweise weist das Beschichtungselement eine Dicke von mindestens 150 µm und höchstens 750 µm, bevorzugt mindestens 200 µm und höchstens 500 µm auf. Dies bietet den Vorteil, dass einerseits die Wärmeisolierung der Schweißbadsicherung noch besser ausgebildet sein kann, als im Vergleich zu einem Beschichtungselement mit einer Dicke zwischen 100 und 200 µm, und andererseits die Kosten nochmals weiter reduziert werden können als im Vergleich zu einer Dicke des Beschichtungselements zwischen 500 µm und 1 mm.

Vorzugsweise erfolgt das Aufbringen des Beschichtungselements auf den Träger zumindest teilweise mittels thermischen Spritzens. Dies bietet den Vorteil, dass das Aufbringen des Beschichtungselements mit geringem zeitlichem Aufwand erfolgen kann. Ferner bietet die Erfindung den Vorteil, dass das Beschichtungselement besonders homogen und/oder gleichmäßig aufgetragen werden kann. Ferner bietet dies den Vorteil, dass die Dicke des Beschichtungselements besonders genau kontrolliert und/oder festgelegt werden kann.

Vorzugsweise erfolgt das Bereitstellen des Trägers derart, dass auf dem Träger vor dem Aufbringen des Beschichtungselements kein wärmeisolierendes Material angeordnet ist. Dies kann insbesondere dann vorteilhaft sein, wenn eine Schmelzbadsicherung neu hergestellt werden soll. Dazu kann beispielsweise das Beschichtungselement auf einen blanken Träger, beispielsweise einen Metallträger, aufgebracht werden. Alternativ kann das Bereitstellen des Trägers derart erfolgen, dass auf dem Träger vor dem Aufbringen des Beschichtungselements bereits zumindest teilweise ein wärmeisolierendes Material angeordnet ist. Dies kann insbesondere dann der Fall sein, wenn eine bereits verwendete und/oder verschlissene Schmelzbadsicherung erneuert werden soll, d.h. wenn das Beschichtungselement, welches unter Umständen zumindest teilweise beschädigt und/oder abgetragen wurde, wieder erneuert werden soll, sodass die Schmelzbadsicherung erneut verwendet werden kann.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen beschrieben.

### Figurenbeschreibung

Figur 1 zeigt in einer schematischen Darstellung einen Ausschnitt einer Schweißbadsicherung gemäß einer ersten bevorzugten Ausführungsform.
Figur 2 zeigt in einer schematischen Querschnittdarstellung eine Schweißbadsicherung gemäß einer bevorzugten Ausführungsform während der bestimmungsgemäßen Verwendung bei einem Schweißvorgang.

### Detaillierte Beschreibung der Figuren

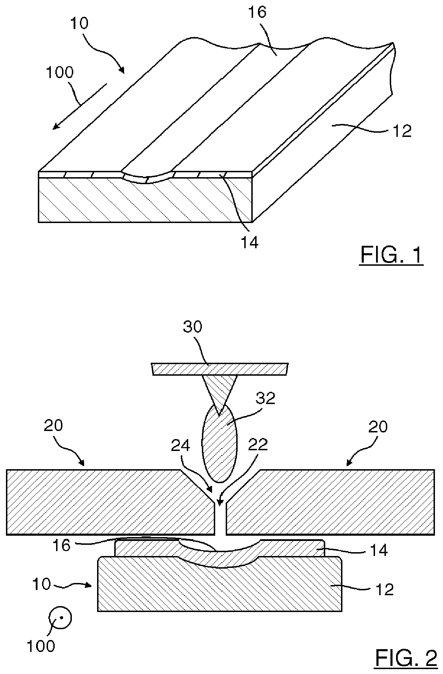

Figur 1 zeigt in einer schematischen Darstellung einen Ausschnitt einer Schweißbadsicherung 10 gemäß einer ersten bevorzugten Ausführungsform. Die Schweißbadsicherung 10 weist dabei einen Träger 12 auf, welcher als flaches und längliches, massives Formstück ausgebildet ist. Der Träger 12 ist vorzugsweise aus Metall gefertigt, insbesondere aus hochlegiertem Stahl, um auch bei großem Wärmeeintrag während eines Schweißvorgangs formstabil zu bleiben. An der Oberseite des Trägers 12, welche während der bestimmungsgemäßen Verwendung der Schweißbadsicherung 10 der Prozesszone bzw. dem Schweißbad zugewandt ist, ist ein Beschichtungselement 14 ausgebildet, welches gemäß der gezeigten bevorzugten Ausführungsform mittels thermischen Spritzens auf den Träger 12 aufgebracht ist. Wenngleich in dieser schematischen Darstellung die Dickenverhältnisse bzw. Längenverhältnisse nicht maßstabsgetreu dargestellt sein müssen, weist das Beschichtungselement 14 eine deutlich geringere Dicke auf, als der Träger 12. Während die Dicke des Trägers 12 vorzugsweise mehrere Millimeter und/oder wenige Zentimeter aufweist, weist das Beschichtungselement 14 eine Dicke von vorzugsweise nicht weniger als 200 µm und nicht mehr als 500 µm auf.

Das Beschichtungselement 14 ist gemäß der gezeigten Ausführungsform aus Zirkoniumoxid ausgebildet, da Zirkoniumoxid ein wärmeisolierendes Material mit besonders guten Eigenschaften ist und somit dem Beschichtungselement besonders vorteilhafte Eigenschaften hinsichtlich der Wärmeisolierung (geringe Wärmeleitfähigkeit) und des Wärmeübergangswiderstands verleiht. So ermöglicht das Beschichtungselement 14, die in der Prozesszone bzw. im Schweißbad vorliegende Wärme auf effektive Weise von dem Träger 12 fernzuhalten, sodass von der im Schweißbad vorliegenden Wärme ein möglichst geringer Anteil auf den Träger 12 übergeht und von diesem an die Umgebung abgegeben wird. Ferner bietet das Beschichtungselement den Vorteil, dass die Schweißbadsicherung 10, insbesondere der Träger 12, von starken thermischen Belastungen weitestgehend verschont bleibt und somit die Langlebigkeit der Schweißbadsicherung 10 erhöht werden kann.

Zudem weist die Schweißbadsicherung 10 eine entlang der Längsrichtung 100 verlaufende Formrinne 16 auf, welche dazu dient, das Schweißbad in seiner räumlichen Ausdehnung zu begrenzen und dadurch der aus dem Schweißprozess resultierenden Schweißnaht die durch die Formrinne 16 vorgegebene Form zu geben.

Die Schweißbadsicherung 10 kann dabei derart ausgebildet sein, dass der räumliche Verlauf und die räumlichen Abmessungen der Schweißbadsicherung 10 dem Verlauf einer zu schweißenden Schweißnaht entsprechen, sodass die Schweißbadsicherung 10 vor Beginn des Schweißvorgangs unterhalb der Schweißfuge, welche zugeschweißt werden soll, angeordnet werden kann und dort während des Schweißvorgangs zur Unterstützung verbleiben kann.

Gemäß der gezeigten bevorzugten Ausführungsform erstreckt sich das Beschichtungselement 14 über die gesamte Oberfläche des Trägers 12. Dies kann den Vorteil bieten, dass der gesamte Träger 12 effektiv vor Wärmeeinwirkung durch das Schweißbad geschützt ist. Gemäß anderer bevorzugter Ausführungsformen kann sich das Beschichtungselement 14 auch lediglich über einen Teil der Oberfläche des Trägers 12 erstrecken. Dies kann insbesondere dann vorteilhaft sein, wenn die Schweißbadsicherung 10 bzw. der Träger 12 derart ausgebildet sind, dass eine Hitzeeinwirkung nicht auf die gesamte Oberfläche des Trägers 12 zu erwarten ist, und demnach die Teile der Oberfläche des Trägers 12, bei welchen keine Hitzeeinwirkung zu erwarten ist, nicht mit dem Beschichtungselement 14 versehen werden. Dadurch können beispielsweise die Herstellungskosten und/oder der Herstellungsaufwand der Schweißbadsicherung 10 reduziert werden.

Figur 2 zeigt in einer schematischen Querschnittdarstellung eine Schweißbadsicherung gemäß einer bevorzugten Ausführungsform während der bestimmungsgemäßen Verwendung bei einem Schweißvorgang. Die Schweißbadsicherung 10 ist dabei derart unterhalb eines Werkstückes 20 angeordnet, dass die Schweißbadsicherung 10 und insbesondere die Formrinne 16 entlang einer Schweißfuge 22 des zu verschweißen den Werkstückes 20 verlaufen. Dabei ist die Schweißbadsicherung 10 derart an dem Werkstück 20 angeordnet, das zwischen dem Träger 12 und der Schweißfuge 22 das Beschichtungselement 14 angeordnet ist, um insbesondere eine entlang der Schweißfuge 22 auftretende Hitze von dem Träger 12 fernzuhalten bzw. davon zu isolieren.

Das Werkstück 20 weist ferner oberhalb der Schweißfuge 22 eine Schweißkerbe 24 auf, in welcher das Werkstück 20 abgeschrägt ist, um einen Raum für die Entstehung des Schweißbades vorzugeben. Sowohl das Werkstück 20 mitsamt der Schweißfuge 22 und der Schweißkerbe 24 als auch die Schweißbadsicherung 10 erstrecken sich dabei entlang der Längsrichtung 100, welche senkrecht zur Zeichenebene steht. Mittels eines Schweißbrenners 30 wird eine Schweißflamme 32 auf die Schweißkerbe 24 und die Schweißfuge 22 gerichtet, sodass sich darin das Schweißbad ausbilden kann, um die beiden durch die Schweißfuge 22 und die Schweißkerbe 24 getrennten Teile des Werkstücks 20 miteinander zu verschweißen. Der aufgrund der Schwerkraft unterhalb der Schweißfuge 22 austretende Teil des Schweißbads kann dabei von der Schweißbadsicherung, insbesondere von der Formrinne 16 des Beschichtungselements 14 aufgefangen und in Position gehalten werden, sodass nach dem Erhärten des Schweißbades eine Schweißnaht mit vorbestimmter Formgebung entsteht.

Das Beschichtungselement 14 sorgt dabei gemäß der gezeigten Ausführungsform nicht nur dafür, dass die Schweißbadsicherung 10 nicht am Werkstück 20 bzw. an der Schweißnaht nach Beendigung des Schweißvorgangs anhaftet, sondern auch dafür, dass der Träger 12 der Schweißbadsicherung 10 möglichst vollständig von der im Schweißbad vorherrschenden Wärme bzw. Hitze isoliert wird, um ein Ableiten der Wärme bzw. Hitze aus dem Schweißbad durch die Schweißbadsicherung 10 zu vermeiden. Somit führt die Verwendung der Schweißbadsicherung 10 dazu, dass der Energieverlust, welcher herkömmlicherweise durch ein Ableiten von Wärmeenergie durch eine konventionelle Schweißbadsicherung erfolgt, reduziert und/oder eliminiert wird und somit die Menge an benötigter Energie, die der Schweißbrenner 30 zum Schweißen bereitstellen muss, verringert werden kann.

### Bezugszeichen

- 10: Schweißbadsicherung
- 12: Träger
- 14: Beschichtungselement
- 16: Formrinne
- 20: Werkstück
- 22: Schweißfuge
- 24: Schweißkerbe
- 30: Schweißbrenner
- 32: Schweißflamme

- 100: Längsrichtung

## Patentansprüche

1. Schweißbadsicherung (10), aufweisend:
- einen Träger (12);
- ein Beschichtungselement (14), welches auf dem Träger (12) angeordnet ist und ein wärmeisolierendes Material aufweist, wobei das Beschichtungselement (12) eine Dicke von zumindest 100 µm und höchstens 1 mm aufweist.

2. Schweißbadsicherung (10) gemäß Anspruch 1, wobei der Träger (12) aus einem festen Formwerkstoff ausgebildet ist, insbesondere aus einem metallischen Werkstoff und/oder aus Keramik.

3. Schweißbadsicherung (10) gemäß Anspruch 1 oder 2, wobei das Beschichtungselement (14) eine geringere Wärmeleitfähigkeit aufweist als der Träger (12), insbesondere eine Wärmeleitfähigkeit von höchstens 50%, 25%, 20%, 10% oder 5% derjenigen des Trägers (12).

4. Schweißbadsicherung (10) gemäß einem der vorhergehenden Ansprüche, wobei das wärmeisolierende Material ein Metalloxid, insbesondere Zirkoniumoxid, umfasst oder daraus besteht.

5. Schweißbadsicherung (10) gemäß einem der vorhergehenden Ansprüche, wobei das Beschichtungselement (14) eine Dicke von mindestens 150 µm und höchstens 750 µm, bevorzugt mindestens 200 µm und höchstens 500 µm aufweist.

6. Schweißbadsicherung (10) gemäß einem der vorhergehenden Ansprüche, wobei das Beschichtungselement (14) mittels thermischen Spritzens auf dem Träger (12) angeordnet und/oder befestigt ist.

7. Verfahren zur Herstellung und/oder Erneuerung einer Schweißbadsicherung (10), umfassend die Schritte:
- Bereitstellen eines Trägers (12);
- Aufbringen eines ein wärmeisolierendes Material aufweisenden Beschichtungselements (14) auf den Träger (14) derart, dass das Beschichtungselement (14) eine Dicke von zumindest 100 µm und höchstens 1 mm aufweist.

8. Verfahren gemäß Anspruch 7, wobei das Aufbringen des Beschichtungselements (14) auf den Träger (12) zumindest teilweise mittels thermischen Spritzens erfolgt.

9. Verfahren gemäß Anspruch 7 oder 8, wobei das Bereitstellen des Trägers (12) derart erfolgt, dass auf dem Träger (12) vor dem Aufbringen des Beschichtungselements (14) kein wärmeisolierendes Material angeordnet ist oder derart erfolgt, dass auf dem Träger (12) vor dem Aufbringen des Beschichtungselements (14) bereits zumindest teilweise ein wärmeisolierendes Material angeordnet ist.
